# EUROPEAN PATENT APPLICATION

(11) **EP 3 103 970 A1**
(43) Date of publication of application: **14.12.2016**
(21) Application number: 16172470.3
(22) Date of filing: 01.06.2016
(51) Int. Cl.: F01D 25/12, F02C 7/12, F16K 31/00, G05D 23/02, G05D 23/13

(54) **SYSTEMS AND METHODS FOR PASSIVELY PROVIDING ONE OR MORE FLOWS OF COOLING FLUID TO A HOT CAVITY WITHIN A COOLING CIRCUIT OF A GAS TURBINE ENGINE**

(30) Priority: 08.06.2015 US 201514733251
(71) Applicant: General Electric Company, Schenectady, NY 12345 (US)
(72) Inventor: MIRANDA, Carlos Miguel, Greenville, SC South Carolina 29615 (US); SIMPSON, Stanley Frank, Greenville, 29615 (US); DAVIS, Dale J., Greenville, SC South Carolina 29615 (US)
(74) Representative: Lee, Brenda

(57) **Abstract**

A thermal valve (100) is disclosed. The thermal valve (100) may provide one or more flows of cooling fluid to a hot cavity (126) within a cooling circuit of a gas turbine engine. The thermal valve (100) may include a temperature sensitive element (102) and a valve assembly (106) in communication with the temperature sensitive element (102). The valve assembly (106) may include at least one inlet (112,114) in fluid communication with at least one cooling fluid source, at least one outlet (116,118) in fluid communication with the hot cavity (126), and at least one valve (120,124) in communication with the temperature sensitive element (102). The at least one valve (120,124) may be disposed between the at least one inlet (112,114) and the at least one outlet (116,118). The temperature sensitive element (102) may be configured to move the at least one valve (120,124) between a closed position and an open position.

## Description

### FIELD

The present disclosure relates generally to thermal valves and more particularly relates to systems and methods for passively providing one or more flows of cooling fluid to a hot cavity within a cooling circuit of a gas turbine engine using a temperature sensitive thermal valve.

### BACKGROUND

Gas turbine engines are widely used in industrial and commercial operations. A typical gas turbine engine includes a compressor at the front, one or more combustors around the middle, and a turbine at the rear. The compressor imparts kinetic energy to the working fluid (e.g., air) to produce a compressed working fluid at a highly energized state. The compressed working fluid exits the compressor and flows to the combustors where it mixes with fuel and ignites to generate combustion gases having a high temperature and pressure. The combustion gases flow to the turbine where they expand to produce work. Consequently, the various components of the gas turbine engine may be exposed to very high temperatures due to the combustion gases. As a result, the various components (such as the shroud assemblies, rotor assemblies, wheel space cavities, and the like) typically need to be cooled and/or supplied purge air. Accordingly, there is a need to provide improved gas turbine engine cooling systems and methods.

### BRIEF DESCRIPTION

Some or all of the above needs and/or problems may be addressed by certain embodiments of the present disclosure. According to an embodiment, a thermal valve is disclosed. The thermal valve may provide one or more flows of cooling fluid to a hot cavity within a cooling circuit of a gas turbine engine. The thermal valve may include a temperature sensitive element and a valve assembly in communication with the temperature sensitive element. The valve assembly may include at least one inlet in fluid communication with at least one cooling fluid source, at least one outlet in fluid communication with the hot cavity, and at least one valve in communication with the temperature sensitive element. The at least one valve may be disposed between the at least one inlet and the at least one outlet. The temperature sensitive element may be configured to move the at least one valve between a closed position and an open position.

In another embodiment, a thermal valve is disclosed. The thermal valve may provide one or more flows of cooling fluid to a hot cavity within a cooling circuit of a gas turbine engine. The thermal valve may include a temperature sensitive element and a valve assembly in communication with the temperature sensitive element. The valve assembly may include a main body having a first inlet, a second inlet, a first outlet, and a second outlet. The valve assembly also may include a first valve disposed within the main body between the first inlet and the first outlet. The first valve may be in communication with the temperature sensitive element. The temperature sensitive element may be configured to move the first valve between a closed position and an open position. The valve assembly also may include a second valve disposed within the main body between the second inlet and the second outlet. The second valve may be in communication with the temperature sensitive element. The temperature sensitive element may be configured to move the second valve between a closed position and an open position.

According to another embodiment, a method of providing one or more flows of cooling fluid to a hot cavity within a cooling circuit of a gas turbine engine is disclosed. The method includes providing a thermal sensitive element about the cooling circuit, opening at least one valve in communication with the thermal sensitive element based at least in part on a temperature of the thermal sensitive element, and supplying a flow of cooling fluid to the hot cavity.

Other embodiments, aspects, and features of the disclosure will become apparent to those skilled in the art from the following detailed description, the accompanying drawings, and the appended claims.

### BRIEF DESCRIPTION OF THE DRAWINGS

Reference will now be made to the accompanying drawings, which are not necessarily drawn to scale.
FIG. 1 schematically depicts a gas turbine engine according to an embodiment.
FIG. 2 schematically depicts a thermal valve in the closed position according to an embodiment.
FIG. 3 schematically depicts a thermal valve in the open position according to an embodiment.
FIG. 4 schematically depicts a thermal valve in the open position according to an embodiment.
FIG. 5 schematically depicts a thermal valve in the open position according to an embodiment.

### DETAILED DESCRIPTION

Illustrative embodiments will now be described more fully hereinafter with reference to the accompanying drawings, in which some, but not all embodiments are shown. The present disclosure may be embodied in many different forms and should not be construed as limited to the embodiments set forth herein. Like numbers refer to like elements throughout.

Embodiments of a thermal valve are disclosed herein. The thermal valve may be used to provide one or more flows of cooling fluid from one or more sources of cooling fluid to a hot cavity within a cooling circuit of a gas turbine engine. The thermal valve may control the fluid flow through multiple orifices in the cooling circuit. In some instances, the thermal valve may include a thermally expandable material, such as a temperature sensitive element. The thermally expandable material may be stable at operating temperatures of up to 1300 degrees Fahrenheit. The thermally expandable material may be stable at any suitable operating temperature, including those above or below 1300 degrees Fahrenheit.

As the temperature about the thermally expandable material increases, the thermally expandable material may expand, which in turn may actuate one or more valves to an open position to enable one or more flows of cooling fluid to enter a hot cavity via one or more orifices. Conversely, as the temperature about the thermally expandable material cools, the thermally expandable material may contract, which in turn may actuate the one or more valves to a closed position, thereby stopping the one or more flows of cooling fluid from entering the hot cavity. Moreover, the expansion and/or contraction of the thermally expandable material may increase or decrease the one or more flows of cooling fluid. In this manner, the thermal valve may provide passive flow modulation within the cooling circuit.

The thermal valve may provide one or more cooling flows from a single or multiple cooling flow sources. In some instances, the one or more cooling flows may be mixed together within the thermal valve. In other instances, the one or more cooling flows may be provided to the hot cavity without mixing within the thermal valve.

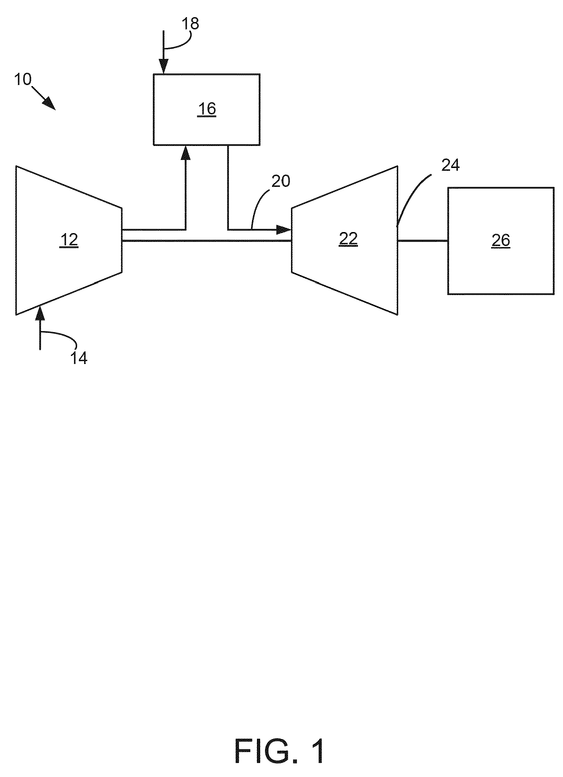

Referring now to the drawings, in which like numerals refer to like elements throughout the several views, FIG. 1 depicts an example schematic view of a gas turbine engine 10 as may be used herein. The gas turbine engine 10 may include a compressor 12. The compressor 12 may compress an incoming flow of air 14. The compressor 12 may deliver the compressed flow of air to a combustor 16. The combustor 16 may mix the compressed flow of air with a pressurized flow of fuel 18 and ignite the mixture to create a flow of combustion gases 20. Although only a single combustor 16 is shown, the gas turbine engine 10 may include any number of combustors 16. The flow of combustion gases 20 may be delivered to a turbine 22. The flow of combustion gases 20 may drive the turbine 22 so as to produce mechanical work. The mechanical work produced in the turbine 22 may drive the compressor 12 via a shaft 24 and an external load 26, such as an electrical generator or the like.

The gas turbine engine 10 may use natural gas, various types of syngas, and/or other types of fuels. The gas turbine engine 10 may be any one of a number of different gas turbine engines offered by General Electric Company of Schenectady, New York, including, but not limited to, those such as a 7 or a 9 series heavy duty gas turbine engine and the like. The gas turbine engine 10 may have different configurations and may use other types of components. The gas turbine engine may be an aeroderivative gas turbine, an industrial gas turbine, or a reciprocating engine. Other types of gas turbine engines also may be used herein. Multiple gas turbine engines, other types of turbines, and other types of power generation equipment also may be used herein together.

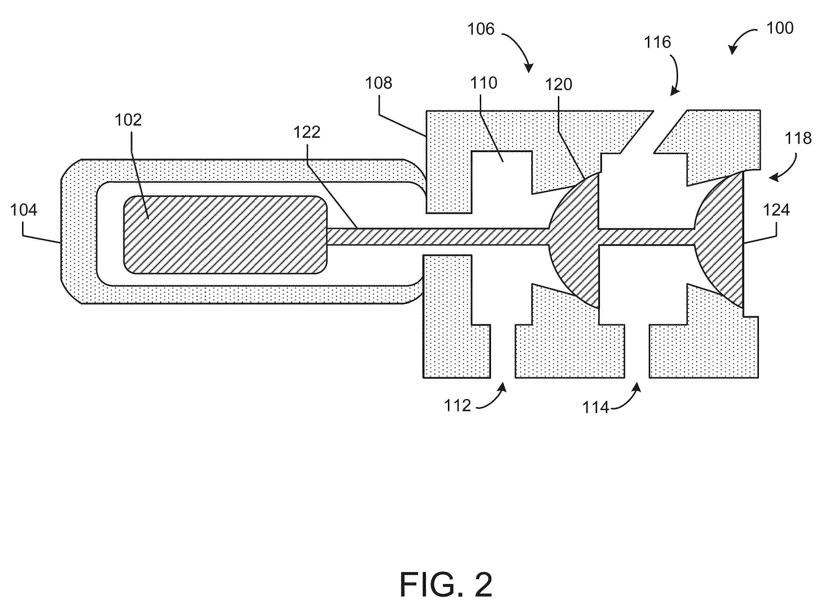

FIGS. 2-5 one or more embodiments of a thermal valve 100. The thermal valve 100 may be disposed within a cooling circuit of a gas turbine engine. In this manner, the thermal valve 100 may be used to cool one or more components of the gas turbine engine. For example, the thermal valve 100 may be in fluid communication with one or more cooling flows, such as bleed air from a compressor. In one example embodiment, the thermal valve 100 may be in fluid communication with bleed air from the compressor 12 in FIG. 1. The thermal valve 100 may be in fluid communication with any number of cooling fluid sources. The thermal valve 100 may enable one or more flows of cooling fluid to enter a hot cavity via one or more orifices.

FIG. 2 depicts the thermal valve 100 in the closed position. The thermal valve 100 may include a temperature sensitive element 102. In some instances, the temperature sensitive element 102 may be disposed within a housing 104. In this manner, the housing 104 may control (or constrict) the direction of the thermal expansion or contraction of the temperature sensitive element 102. The temperature sensitive element 102 may be positioned about the cooling circuit. For example, the temperature sensitive element may be disposed within a hot cavity of a component of a gas turbine engine or adjacent thereto. The temperature sensitive element 102 may be disposed at any location about the gas turbine engine.

The thermal valve 100 also may include a valve assembly 106. The valve assembly 106 may be disposed about the cooling circuit. As discussed below, the valve assembly 106 may be in mechanical communication with the temperature sensitive element 102. The valve assembly 106 may include a main body 108. The main body 108 may include one or more cavities/fluid pathways 110 therein. The valve assembly 106 also may include a first inlet 112, a second inlet 114, a first outlet 116, and a second outlet 118. Any number of inlets and/or outlets may be used herein. For example, the valve assembly may include 2, 3, 4, 5, or more inlets and/or outlets. The use of two inlets and two outlets is for illustrative purposes only and is not intended to be limiting.

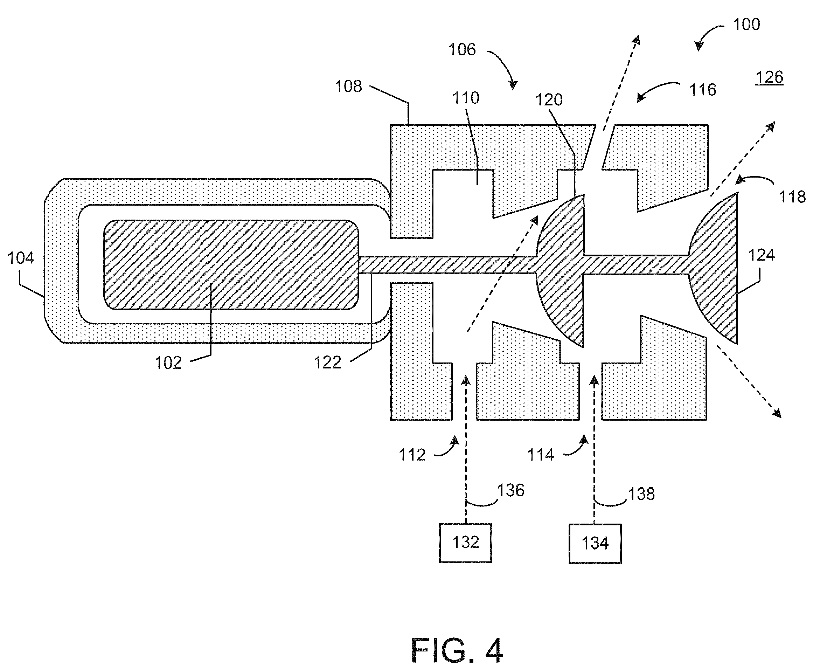

A first valve 120 may be disposed within the main body 108 along the pathway between the first inlet 112 and the first outlet 116. The first valve 120 may seat within the one or more cavities/fluid pathways 110 to prevent fluid flow therebetween. In some instances, as depicted in FIGS. 2 and 4, there is a flow path from 114 to 116 when the valve is closed. That is, even when the valve is closed, there may be some amount of fixed, metered flow thru inlet 114 and outlet 116. When the valve moves open, there may be additional modulated flow through all the outlets. The first valve 120 may be in mechanical communication with the temperature sensitive element 102 by way of, for example, a stem 122. In this manner, the temperature sensitive element 102 may be configured to move the first valve 120 between a closed position and an open position as it expands and contracts. Similarly, a second valve 124 may be disposed within the main body 108 along the pathway between the second inlet 114 and the second outlet 118. The second valve 124 may seat within the one or more cavities/fluid pathways 110 to prevent fluid flow therebetween. The second valve 124 also may be in mechanical communication with the temperature sensitive element 102 by way of the stem 122. In this manner, the temperature sensitive element 102 may be configured to move the second valve 124 between a closed position and an open position as it expands and contracts. Any number of valves may be used herein. For example, the valve assembly may include 2, 3, 4, 5, or more valves. The use of two valves is for illustrative purposes only and is not intended to be limiting.

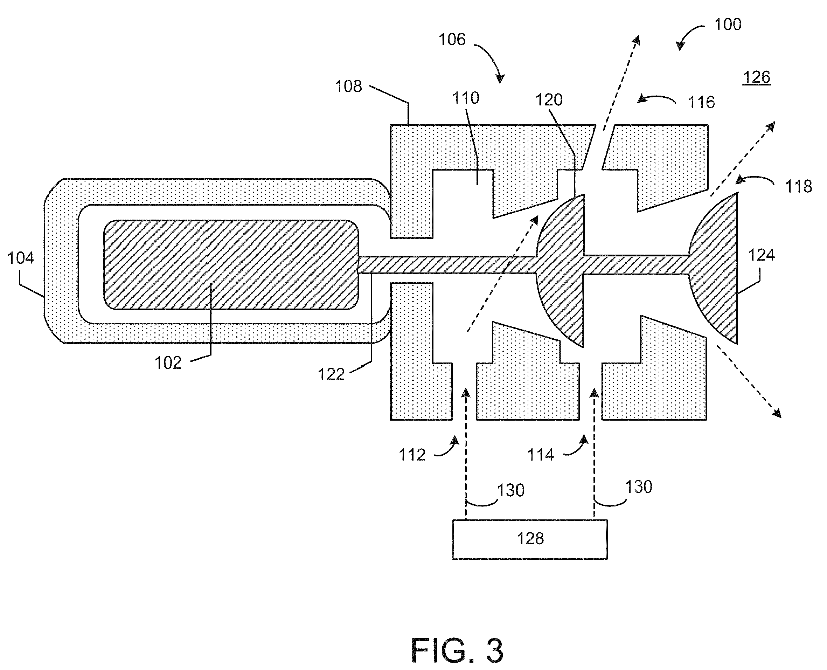

As depicted in FIG. 3, the first outlet 116 and the second outlet 118 may be in fluid communication with a hot cavity 126. In addition, the first inlet 112 and the second inlet 114 may be in fluid communication with a first cooling fluid source 128. In this manner, a first flow of cooling fluid 130 from the first cooling fluid source 128 may be supplied to the hot cavity 126 when the first valve 120 and the second valve 124 are in the open position. Furthermore, the first flow of cooling fluid 130 entering the main body 108 from the first inlet 112 and the second inlet 114 may mix within the one or more cavities/fluid pathways 110 within the main body 108 and exit out of the first outlet 116 and the second outlet 118 and into the hot cavity 126.

As depicted in FIG. 4, the first inlet 112 may be in fluid communication with a first cooling fluid source 132 and the second inlet 114 may be in fluid communication with a second cooling fluid source 134. In this manner, a first flow of cooling fluid 136 from the first cooling fluid source 132 may be supplied to the hot cavity 126 when the first valve 120 is in the open position. Similarly, a second flow of cooling fluid 138 from the second cooling fluid source 134 may be supplied to the hot cavity 126 when the second valve 124 is in the open position. In some instances, the first flow of cooling fluid 136 and the second flow of cooling fluid 138 may mix within the one or more cavities/fluid pathways 110 within the main body 108 and exit out of the first outlet 116 and the second outlet 118 and into the hot cavity 126.

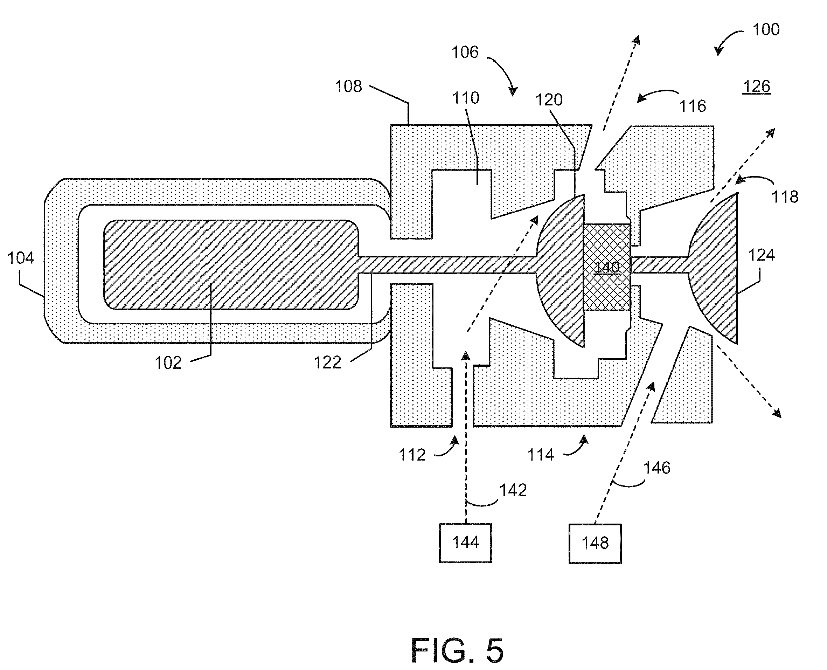

As depicted in FIG. 5, the thermal valve 100 may include a seal 140 disposed between the first valve 120 and the second valve 124. The seal 140 may prevent a first flow of cooling fluid 142 from a first cooling fluid source 144 from mixing with a second flow of cooling fluid 146 from a second cooling fluid source 148 within the valve assembly 106. That is, the seal 140 may separate the one or more cavities/fluid pathways 110 within the main body 108 such that the first flow of cooling fluid 142 does not mix with the second flow of cooling fluid 146. In this manner, the first flow of cooling fluid 142 may enter the main body 108 by way of the first inlet 112 and exit the main body 108 by way of the first outlet 116. Similarly, the second flow of cooling fluid 146 may enter the main body 108 by way of the second inlet 114 and exit the main body 108 by way of the second outlet 118. In some instances, the first inlet 112 and the second inlet 114 may be in communication with the same source of cooling fluid.

Any number of inlets, outlet, cavities/flow paths, cooling fluid sources, and/or flows of cooling fluid may be used herein. In this manner, the thermal valve 100 may be configured to provide passive flow modulation to various gas turbine engine hot components from one or more cooling fluid sources.
Although embodiments have been described in language specific to structural features and/or methodological acts, it is to be understood that the disclosure is not necessarily limited to the specific features or acts described. Rather, the specific features and acts are disclosed as illustrative forms of implementing the embodiments.

## Claims

1. A thermal valve (100) for providing one or more flows of cooling fluid to a hot cavity (126) within a cooling circuit of a gas turbine engine, the thermal valve comprising:
a temperature sensitive element (102); and
a valve assembly (106) in communication with the temperature sensitive element (102), wherein the valve assembly (106) comprises:
at least one inlet (112,114) in fluid communication with at least one cooling fluid source;
at least one outlet (116,118) in fluid communication with the hot cavity (126); and
at least one valve (120,124) in communication with the temperature sensitive element (102) and disposed between the at least one inlet (112,114) and the at least one outlet (116,118), wherein the temperature sensitive element (102) is configured to move the at least one valve (120,124) between a closed position and an open position.

2. The thermal valve of claim 1, wherein the at least one inlet (112,114) comprises a first inlet (112) and a second inlet (114).

3. The thermal valve of claim 2, wherein the first inlet (112) is in fluid communication with a first cooling fluid source (128) and the second inlet (114) is in fluid communication with a second cooling fluid source (134).

4. The thermal valve of claim 2, wherein the first inlet (112) and the second inlet (114) are in fluid communication with a first cooling fluid source (128).

5. The thermal valve of claim 2, wherein the at least one outlet (116,118) comprises a first outlet (116) and a second outlet (118) in fluid communication with the hot cavity (126).

6. The thermal valve of claim 5, wherein the at least one valve (120,124) comprises a first valve (120) disposed between the first inlet (112) and the first outlet (116) and a second valve (124) disposed between the second inlet (114) and the second outlet (118).

7. The thermal valve of any preceding claim, wherein two or more flows of cooling fluid mix in the valve assembly (106) before being supplied to the hot cavity (126).

8. The thermal valve of any of claims 1 to 6, wherein two or more flows of cooling fluid are supplied to the hot cavity (126) without mixing in the valve assembly (106).

9. The thermal valve of any preceding claim, wherein the temperature sensitive element (102) is disposed within a housing (104).

10. A system, comprising:
a gas turbine engine (10) comprising a compressor (12), a combustor (16), and a turbine (22); and
the thermal valve (106) of any preceding claims, wherein the valve assembly (106) comprises:
a main body (108) having a first inlet (112), a second inlet (114), a first outlet (116), and a second outlet (118), and the at least one valve comprises:
a first valve (120) disposed within the main body (108) between the first inlet (112) and the first outlet (116) and in communication with the temperature sensitive element (102), wherein the temperature sensitive element (102) is configured to move the first valve (120) between a closed position and an open position; and
a second valve (124) disposed within the main body (108) between the second inlet (114) and the second outlet (118) and in communication with the temperature sensitive element (102) wherein the temperature sensitive element (102) is configured to move the second valve (124) between a closed position and an open position.

11. The system of claim 10, wherein a first flow of cooling fluid from a first cooling fluid source (128) is supplied to the hot cavity (126) when the first valve (120) and the second valve (124) are in the open position.

12. A method of providing one or more flows of cooling fluid to a hot cavity (126) within a cooling circuit of a gas turbine engine, the method comprising:
providing a thermal sensitive element (102) about the cooling circuit;
opening at least one valve (120,124) in communication with the thermal sensitive element (102) based at least in part on a temperature of the thermal sensitive element (102); and
supplying a flow of cooling fluid to the hot cavity (126).
